# EUROPÄISCHE PATENTANMELDUNG

(11) **EP 2 325 653 A1**
(43) Veröffentlichungstag der Anmeldung: **25.05.2011**
(21) Anmeldenummer: 10191251.7
(22) Anmeldetag: 15.11.2010
(51) Int. Cl.: G01P 3/36, F01D 17/06

(54) **Gasturbinentriebwerk mit einer Anordnung zur Messung der Wellendrehgeschwindigkeit**

(30) Priorität: 17.11.2009 DE 102009053339
(71) Anmelder: Rolls-Royce Deutschland Ltd & Co KG, 15827 Blankenfelde-Mahlow (DE)
(72) Erfinder: Thies, Robert, 14548 Schwielowsee (DE)

(57) **Zusammenfassung**

Bei einem Gasturbinentriebwerk mit einer Anordnung zur Messung der Wellendrehgeschwindigkeit sind eine im Triebwerk angeordnete, auf die Schaufelspitzen (13) oder Schaufellängskanten oder an den Schaufeln angebrachte reflektierende Mittel gerichtete Laserquelle (10) zur Erzeugung eines Laserlichtstrahls (11) und von durch Reflexion oder durch Unterbrechung beim Durchgang zwischen den Schaufeln in Abhängigkeit von der Rotordrehzahl erzeugten Lichtimpulsen sowie eine die Lichtimpulse aufnehmende Empfängerdiode (12) zur Erzeugung von Spannungsimpulsen, deren Anzahl ein Maß für die Rotor- oder Wellendrehzahl ist, vorgesehen. Eine der Empfängerdiode zugeordnete Auswerteeinheit misst die Anzahl der pro Zeiteinheit durch den reflektierten oder unterbrochenen Lichtstrahl erzeugten Spannungsimpulse und berechnet daraus die Drehgeschwindigkeit der mit dem betreffenden Rotor verbundenen Triebwerkswelle. Die im Triebwerksgehäuse angeordnete Messanordnung ist für die Montage, Wartung und Einstellung leicht zugänglich, auch im robusten Triebwerksbetrieb funktionssicher und erfasst die Rotation einer mit dem Fan verbundenen Niederdruckwelle als Ganzes. (Fig. 2)

## Beschreibung

Die Erfindung betrifft ein Gasturbinentriebwerk mit einer Anordnung zur Messung der Wellendrehgeschwindigkeit, das innerhalb eines Triebwerksgehäuseabschnitts an eine Triebwerkswelle angeschlossene, beschaufelte Rotoren und diesen zugeordnete Statoren aufweist.

Bei Turbofantriebwerken ist es zur Kontrolle der Funktion des Triebwerks während dessen Betrieb erforderlich, genaue Kenntnisse über die Rotationsgeschwindigkeit der mit dem Fan verbundenen Niederdruckwelle zu haben. Bekanntermaßen wird die Geschwindigkeit der Niederdruckturbinenwelle mit einem phonischen Rad gemessen, das ein mit der Niederdruckwelle rotierendes ferromagnetisches Zahnrad und einen in sehr geringem Abstand von den Zähnen angeordneten, von einem intermittierenden elektrischen Strom durchflossenen Elektromagneten umfasst. Auf der Grundlage einer Zählung der in Abhängigkeit von der Drehgeschwindigkeit des Zahnrades erzeugten Spannungsänderungsimpulse wird die Drehzahl der Niederdruckturbinenwelle ermittelt. Ein derartiges Messsystem ist beispielsweise in der US 4866987 A beschrieben.

Die Anwendung dieses Messprinzips an der Niederdruckwelle des Triebwerks ist insofern nachteilig, als das ferromagnetische Zahnrad und der zugehörige Sensor im Innern des Triebwerks angeordnet und demzufolge von außen nur schwer zugänglich sind und die Einstellung des zur Erzielung exakter Messergebnisse erforderlichen - sehr geringen - Abstandes zwischen dem Zahnrad und dem Elektromagneten Schwierigkeiten bereitet. Aufgrund des schwierigen Zugangs zu der Messanordnung ist es erforderlich, mehrere Sensoren am Umfang des Zahnrades anzuordnen, um in jedem Fall die Erzeugung eines Geschwindigkeitssignals zu garantieren. Ein weiterer Nachteil besteht zudem darin, dass die auf dem phonischen Rad beruhende Messanordnung aus Platzgründen nicht im vordersten Bereich der Niederdruckwelle angeordnet werden kann und somit ein durch Bruch oder Abscheren bedingtes Versagen des Fanwellenabschnitts der Niederdruckwelle nicht erfasst werden kann. Dieser Nachteil wird durch eine stärkere Dimensionierung dieses Wellenbereichs ausgeglichen.

Der Erfindung liegt die Aufgabe zugrunde, eine Drehgeschwindigkeitsmessvorrichtung für eine mit einem Rotor verbundene Triebwerkswelle so auszubilden und im Triebwerk anzuordnen, dass die Drehzahl der gesamten Triebwerkswelle mit geringem Aufwand zuverlässig überwacht werden kann.

Erfindungsgemäß wird die Aufgabe mit einem gemäß den Merkmalen des Patentanspruchs 1 ausgebildeten Gasturbinentriebwerk gelöst. Zweckmäßige Ausgestaltungen der Erfindung sind Gegenstand der Unteransprüche.

Bei der Messung der Wellendrehgeschwindigkeit in einem Gasturbinentriebwerk, das innerhalb eines Triebwerksgehäuseabschnitts an eine Triebwerkswelle angeschlossene, beschaufelte Rotoren und diesen zugeordnete Statoren aufweist, ist eine im Triebwerk angeordnete, auf die Schaufelspitzen oder Schaufellängskanten oder an den Schaufeln angebrachte reflektierende Mittel gerichtete Laserquelle zur Erzeugung eines Laserlichtstrahls und zur Erzeugung von durch Reflexion oder durch Unterbrechung beim Durchgang zwischen den Schaufeln in Abhängigkeit von der Rotordrehzahl bewirkten Lichtimpulsen sowie eine die Lichtimpulse aufnehmende Empfängerdiode zur Erzeugung von Spannungsimpulsen angeordnet. Die Anzahl der Spannungsimpulse ist ein Maß für die Rotor- oder Wellendrehzahl, wobei der Empfängerdiode eine Auswerteeinheit zum Zählen der Spannungsimpulse und zum Berechnen der Drehgeschwindigkeit der mit dem betreffenden Rotor verbundenen Triebwerkswelle zugeordnet ist. Die Einbindung einer derartigen Messanordnung in das Triebwerk macht die Messanordnung leicht zugänglich und erleichtert deren Montage, Wartung und Einstellung. Eine möglichst enge, hochpräzise Einstellung des Abstands der Messanordnung zu den Schaufeln ist jedoch nicht erforderlich, so dass die Messvorrichtung auch im robusten Triebwerksbetrieb, zum Beispiel bei einer Streckung oder einem Flattern der Schaufeln, die Drehgeschwindigkeit der mit dem betreffenden Rotor verbundenen Welle funktionssicher messen kann. Bei der Messung der Drehgeschwindigkeit der Niederdruckwelle eines Turbofantriebwerks kann mit einer an den Schaufelspitzen des Fans durchgeführten Messung die Drehgeschwindigkeit der Niederdruckwelle als Ganzes, das heißt auch der unmittelbar mit dem Fan verbundene Teil der Niederdruckwelle, erfasst und auch ein in diesem Bereich auftretender Wellenbruch erkannt werden.

In weiterer Ausgestaltung der Erfindung sind die Laserquelle und die Empfängerdiode zum Empfangen eines von den Schaufeln reflektierten Lichtstrahls winklig zueinander in einem an die Schaufeln grenzenden Triebwerksgehäuseabschnitt angeordnet, so dass die reflektierten Lichtstrahlen auf die Empfängerdiode treffen.

In Ausgestaltung der Erfindung sind die Laserquelle und die Empfängerdiode in einer Wandausnehmung des jeweiligen Triebwerksgehäuseabschnitts angeordnet.

In weiterer Ausgestaltung der Erfindung ist der beschaufelte Rotor der mit der Niederdruckwelle verbundene Fan des Triebwerks und der Triebwerksgehäuseabschnitt ist das den Fan umgebende Fangehäuse.

In weiterer Ausbildung der Erfindung sind die jeweilige Laserquelle und die jeweilige Empfängerdiode an einem Triebwerksgehäuseabschnitt und an einem Stator angeordnet und so zueinander ausgerichtet, dass der jeweils zwischen zwei benachbarten Rotorschaufeln hindurchgehende Lichtimpuls auf die Empfängerdiode trifft.

In noch weiterer Ausgestaltung der Erfindung sind die Laserquelle und die Empfängerdiode jeweils gegenüberliegend an einem stromab und einem stromauf eines Rotors angeordneten Stator angebracht, und zwar derart, dass entweder die zwischen den rotierenden Rotorschaufeln hindurchgehenden Lichtimpulse oder von den Rotorschaufeln reflektierte Lichtimpulse auf die Empfängerdiode treffen.

Darüber hinaus ist es auch denkbar, dass die Laserquelle und die Empfängerdiode gemeinsam an einem stromauf oder stromab vom Rotor befindlichen Stator so angeordnet sind, dass die Empfängerdiode jeweils von den Rotorschaufeln reflektierte Lichtimpulse empfangen kann.

In Ausgestaltung der Erfindung ist die Empfängerdiode eine Photodiode oder ein optischer Sensor. Vorzugsweise ist der Empfängerdiode ein Filter zum Ausfiltern von störendem Licht zugeordnet.

Ein Ausführungsbeispiel der Erfindung wird anhand der Zeichnung näher erläutert. Es zeigen:
- Fig. 1: eine schematische Darstellung eines Turbofan- triebwerks;
- Fig. 2: eine Schnittansicht im Bereich des Fans mit ei- ner im Fangehäuse angeordneten Messvorrichtung zur Ermittlung der Drehgeschwindigkeit der Nie- derdruckwelle; und
- Fig. 3: eine detaillierte Darstellung der Messvorrich- tung gemäß Fig. 2.

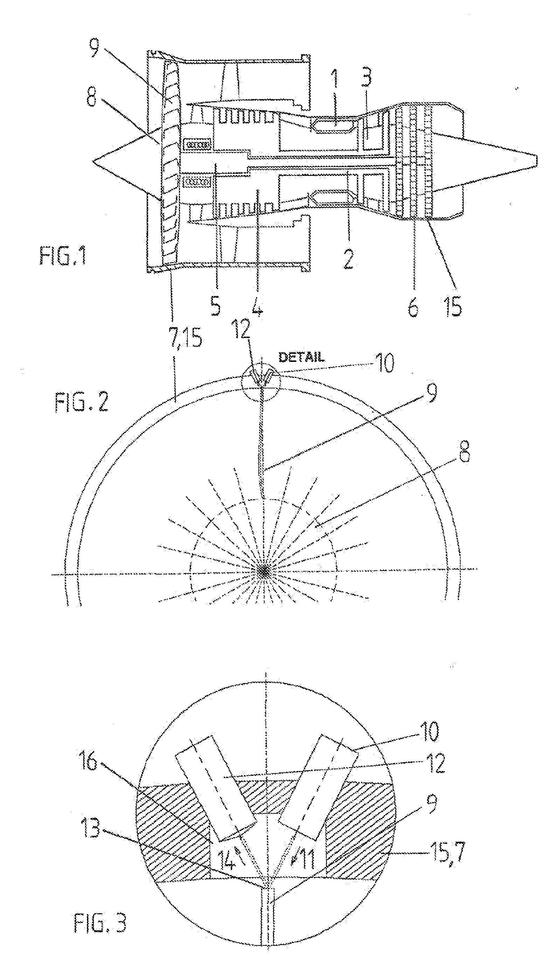

Das in Fig. 1 stark vereinfacht dargestellte Turbofantriebwerk umfasst stromab der Brennkammer 1 eine mit der Hochdruckwelle 2 verbundene Hochdruckturbine 3 (von Triebwerksgehäuseabschnitt 15 umgebener Rotor), über die ein Kompressor 4 angetrieben wird, sowie eine mit der Niederdruckwelle 5 des Turbofantriebwerks verbundene Niederdruckturbine 6 zum Antrieb des innerhalb eines Fangehäuses 7 rotierenden Fans 8. Die Hochdruck und die Niederdruckturbine sowie der Kompressor umfassen jeweils einen von einem Triebwerksgehäuseabschnitt 15 umgebenen beschaufelten Rotor. Der Fan 8 weist eine Vielzahl von in regelmäßigem Abstand am Umfang einer Nabe befestigten Fanschaufeln 9 auf. In den Darstellungen gemäß Fig. 2 und 3 ist das Fangehäuse 7 mit - der Einfachheit halber - nur einer Fanschaufel 9 dargestellt. In das Fangehäuse 7 ist im Bereich des die Schaufelspitzen 13 umgebenden Triebwerksgehäuseabschnitts eine Messvorrichtung zum Erfassen der Drehgeschwindigkeit der Niederdruckwelle 5 integriert, die eine Laserquelle 10 zur Erzeugung eines Laserlichtstrahls 11 und eine Photodiode 12 umfasst. Während der Rotation des Fans wird der Laserlichtstrahl 11 beim Auftreffen auf die jeweilige Schaufelspitze 13 in Richtung der Photodiode 12 reflektiert. Die Laserquelle 10 und die Photodiode 12 sind im Winkel zueinander innerhalb einer in dem Triebwerksgehäuseabschnitt 15, hier dem Fangehäuse 7, ausgebildeten Ausnehmung 16 angeordnet. Der von der jeweiligen - den Laserlichtstrahl 11 passierenden - Schaufelspitze 13 reflektierte Lichtstrahl 14 erzeugt einen Spannungsimpuls, der von einer Zähleinheit (nicht dargestellt) erfasst wird. Die Anzahl der pro Zeiteinheit erzeugten Spannungsimpulse ist ein Maß für die Drehzahl des Fans und damit auch der Drehzahl der Niederdruckwelle, die unter Zugrundelegung der Fanparameter in einer Auswerteeinheit (nicht dargestellt) errechnet und angezeigt wird.

Die so ausgebildete und in das Triebwerk integrierte Messanordnung ist leicht zugänglich und kann auf einfache Art gewartet und eingestellt werden. Zudem ist eine derart hochpräzise Einstellung der Spaltweite wie beim phonischen Rad nicht erforderlich, so dass auch ein Flattern oder eine Streckung der Fanschaufeln im Betrieb den Messvorgang nicht beeinträchtigen. Ein wesentlicher Vorteil der gemäß dem vorliegenden Ausführungsbeispiel von den Schaufelspitzen der Fanschaufeln und der Laserquelle sowie der Photodiode gebildeten Messanordnung besteht darin, dass die Niederdruckwelle eines Turbofantriebwerks in ihrer gesamten Länge überwacht und auch ein Bruch des an den Fan anschließenden Teils der Niederdruckwelle (Fanwelle) erfasst wird, so dass die Fanwelle geringer dimensioniert und Gewicht eingespart werden kann.

Die Erfindung ist nicht auf die zuvor erläuterte, bevorzugte Ausführungsform beschränkt. Vielmehr sind im Rahmen der Ansprüche zahlreiche Modifikationen denkbar. Das heißt, die eine Laserquelle und eine Empfängerdiode umfassende Messanordnung kann zur Messung der Drehgeschwindigkeit der Niederdruckturbinenwelle auch in das Gehäuse der Niederdruckturbine oder zur Messung der Drehgeschwindigkeit der Hochdruckwelle in das Hochdruckturbinengehäuse oder das Kompressorgehäuse integriert sein und am Gehäuse und am Stator oder nur am Stator angebracht sein. Die durch die Rotation des Rotors erzeugten und von der Empfängerdiode erfassten Lichtstrahlimpulse können durch Reflexion an irgendeinem Teil der Schaufel bzw. an den Rotorschaufeln angebrachten Reflexionsmitteln oder durch Unterbrechung des Laserlichtstrahls erzeugt werden.

### Bezugszeichenliste

- 1: Brennkammer
- 2: Hochdruckwelle
- 3: Hochdruckturbine
- 4: Kompressor
- 5: Niederdruckwelle
- 6: Niederdruckturbine
- 7: Fangehäuse, Triebwerksgehäuseabschnitt
- 8: Fan, Rotor
- 9: Fanschaufel
- 10: Laserquelle
- 11: Laserlichtstrahl
- 12: Empfängerdiode
- 13: Schaufelspitze
- 14: Reflektierter Lichtstrahl
- 15: Triebwerksgehäuseabschnitt, Gehäusewand
- 16: Ausnehmung in 15, 7

## Patentansprüche

1. Gasturbinentriebwerk mit einer Anordnung zur Messung der Wellendrehgeschwindigkeit, das innerhalb eines Triebwerksgehäuseabschnitts (15, 7) an eine Triebwerkswelle (3, 5) angeschlossene, beschaufelte Rotoren und diesen zugeordnete Statoren aufweist, **gekennzeichnet durch** eine im Triebwerk angeordnete, auf die Schaufelspitzen (13) oder Schaufellängskanten oder an den Schaufeln angebrachte reflektierende Mittel gerichtete Laserquelle (10) zur Erzeugung eines Laserlichtstrahls (11) und **durch** Reflexion oder **durch** Unterbrechung beim Durchgang zwischen den Schaufeln in Abhängigkeit von der Rotordrehzahl erzeugten Lichtimpulsen sowie eine die Lichtimpulse aufnehmende Empfängerdiode (12) zur Erzeugung von Spannungsimpulsen, deren Anzahl ein Maß für die Rotor- oder Wellendrehzahl ist, wobei der Empfängerdiode (12) eine Auswerteeinheit zum Zählen der Spannungsimpulse und zum Berechnen der Drehgeschwindigkeit der mit dem betreffenden Rotor verbundenen Triebwerkswelle (3, 5) zugeordnet ist.

2. Gasturbinentriebwerk nach Anspruch 1, **dadurch gekennzeichnet, dass** die Laserquelle (10) und die Empfängerdiode (12) zum Empfangen eines von den Schaufelspitzen reflektierten Lichtstrahls winklig zueinander in einem an die Schaufelspitzen grenzenden Triebwerksgehäuseabschnitt (15) angeordnet sind, so dass die reflektierten Lichtstrahlen (14) auf die Empfängerdiode (12) treffen.

3. Gasturbinentriebwerk nach Anspruch 2, **dadurch gekennzeichnet, dass** die Laserquelle (10) und die Empfängerdiode (12) in einer Wandausnehmung (16) des jeweiligen Triebwerksgehäuseabschnitts (15) angeordnet sind.

4. Gasturbinentriebwerk nach einem der Ansprüche 1 bis 3, **dadurch gekennzeichnet, dass** der beschaufelte Rotor der mit der Niederdruckwelle (5) verbundene Fan (8) des Triebwerks und der Triebwerksgehäuseabschnitt (15) das den Fan (8) umgebende Fangehäuse ist.

5. Gasturbinentriebwerk nach Anspruch 1, **dadurch gekennzeichnet**, das die jeweilige Laserquelle (10) und die jeweilige Empfängerdiode (12) an einem Triebwerksgehäuseabschnitt (15) und an einem Stator angeordnet und so zueinander ausgerichtet sind, dass der jeweils zwischen zwei benachbarten Rotorschaufeln hindurchgehende Lichtimpuls auf die Empfängerdiode (12) trifft.

6. Gasturbinentriebwerk nach Anspruch 1, **dadurch gekennzeichnet, dass** die Laserquelle (10) und die Empfängerdiode (12) jeweils gegenüberliegend an einem stromab und einer stromauf eines Rotors angeordneten Stator angebracht sind, wobei entweder zwischen den Rotorschaufeln hindurchgehende oder von diesen reflektierte Lichtimpulse auf die Empfängerdiode treffen.

7. Gasturbinentriebwerk nach Anspruch 1, **dadurch gekennzeichnet, dass** die Laserquelle (10) und die Empfängerdiode (12) gemeinsam an einem stromauf oder stromab vom Rotor befindlichen Stator so angebracht sind, dass die Empfängerdiode jeweils von den Rotorschaufeln reflektierte Lichtimpulse empfängt.

8. Gasturbinentriebwerk nach Anspruch 1, **dadurch gekennzeichnet, dass** die Empfängerdiode (12) eine Photodiode oder ein optischer Sensor ist.

9. Gasturbinentriebwerk nach Anspruch 1, **dadurch gekennzeichnet, dass** der Empfängerdiode (12) ein Filter zum Ausfiltern von störendem Licht zugeordnet ist.
